# FASCICULE DE BREVET EUROPEEN

(11) **EP 2 162 372 B1**
(45) Date de publication et mention de la délivrance du brevet: **16.11.2016**
(21) Numéro de dépôt: 08805558.7
(22) Date de dépôt: 09.05.2008
(51) Int. Cl.: B60L 11/18, B65G 1/04

(54) **MAGASIN DE STOCKAGE COMPACT AUTOMATISE AVEC NAVETTE AUTONOME**
AUTOMATISIERTES KOMPAKTLAGER MIT AUTONOMEM FAHRBAND
COMPACT AUTOMATED STORAGE WAREHOUSE WITH AUTONOMOUS SHUTTLE CONVEYOR

(30) Priorité: 11.05.2007 FR 0703400
(43) Date de publication de la demande: 17.03.2010
(73) Titulaire: SAVOYE, 21000 Dijon (FR)
(72) Inventeur: KRIZMANIC, Renato, 21800 Chevigny-Saint-Sauveur (FR); FOULON, Joël, 21200 Combertault (FR); PIETROWICZ, Stéphane, 21220 Fixin (FR); ATTAL, Jean-David, 21000 Dijon (FR); PIETTE, Bernard, 21000 Dijon (FR)
(74) Mandataire: Vidon Brevets & Stratégie
(86) Numéro de dépôt international: PCT/FR2008/000653
(87) Numéro de publication internationale: WO 2008/152246

(56) Documents cités:
- DE-A1- 10 142 395
- DE-U1-202007 003 447
- US-A- 3 880 299
- US-A- 4 252 217
- US-A- 5 914 542

## Description

L'invention concerne un magasin de stockage compact automatisé comprenant une navette autonome.

Un magasin de stockage automatisé comprend une pluralité de niveaux de rangements superposés dans lesquels des navettes autonomes assurent le déplacement des produits, pour leur mise en place à l'intérieur de zones de stockage et pour leur prélèvement depuis ces zones, ces navettes pouvant non seulement se déplacer horizontalement à un niveau donné, mais aussi être amenées d'un niveau à un autre par des élévateurs.

Le magasin de stockage comprend des ensembles de rangement, chaque ensemble de rangement étant formé de deux armoires de stockage disposées de part et d'autre d'une allée, cette allée recevant, à chaque niveau de rangement, des voies pour le déplacement horizontal d'une navette et un élévateur étant disposé à une extrémité de l'allée. Une voie est généralement formée de deux rails parallèles et la navette est équipée de roues pour se déplacer sur ces rails.

Dans le cadre de la présente invention, un entrepôt de stockage et de préparation logistique dans lequel évoluera la navette comporte au moins un magasin de stockage tel que précédemment décrit. L'entrepôt pourra également comporter des voies reliant un magasin à un autre ou reliant différentes zones opérationnelles de l'entrepôt à un magasin ou entre elles, la navette pouvant circuler sur ces voies.

Une solution connue pour assurer l'autonomie de déplacement des navettes consiste à utiliser des rails conducteurs reliés à une source d'énergie électrique, l'équipement électrique d'une navette étant relié électriquement au rail. Cette solution n'est toutefois pas satisfaisante, car les rails ont une longueur importante, ce qui ne permet pas d'assurer une alimentation électrique uniforme de la navette suivant sa position dans l'allée et qu'en outre, du fait de leur longueur, le coût des rails conducteurs représentent une part importante dans le prix d'une installation. Par ailleurs, en cas de mauvais contact électrique entre le rail et la navette, par exemple si un corps étranger isolant se trouve sur le rail (cas d'un morceau de papier ou de plastique tombé d'un rangement), la navette est immobilisée. Il faut alors arrêter l'ensemble de l'installation pour intervenir manuellement afin de déplacer la navette et éliminer le corps étranger.

Ainsi, le modèle d'utilité DE 101 42 395 décrit une variante de cette solution, dans laquelle les véhicules comportent des contacteurs qui les relient électriquement aux rails pour fournir l'énergie nécessaire à leur propulsion. En outre, ces véhicules possèdent des capacités haute performance qui fournissent le surplus d'énergie nécessaire pendant les phases d'accélération et qui peuvent être rechargées via les rails notamment pendant les déplacements qui ne nécessitent pas ledit surplus d'énergie. Ici, les condensateurs ne fournissent qu'une énergie d'appoint.

Une autre solution connue consiste à équiper la navette d'une batterie d'accumulateurs. L'inconvénient de cette solution est que la recharge de la batterie est une opération compliquée, puisqu'il faut surveiller la tension de charge, la température, le courant, etc. Ceci impose généralement de sortir la navette du magasin de stockage pour effectuer la recharge sur une station de recharge où un opérateur peut contrôler les paramètres de charge, ou de munir la navette d'un système électronique complexe de contrôle de la charge de la batterie d'accumulateurs. Par ailleurs, la capacité de la batterie se dégrade à chaque recharge, de sorte qu'une batterie n'est plus utilisable après une série d'environ 500 cycles de charge. D'autre part, le courant de charge est limité, ce qui conduit à sur dimensionner la batterie pour recharger pendant le cycle de fonctionnement de la navette, d'où des coûts additionnels.

Par exemple, le modèle d'utilité DE 20 2007 003 447, propose d'alimenter les moteurs électrique de propulsion de la navette par un stockage d'énergie rechargeable qui peut être indifféremment une batterie, un accumulateur, un condensateur ou tout dispositif similaire. Toutefois, aucune réalisation technique concrète comportant un condensateur ou une batterie de condensateur comme source d'énergie principale de propulsion n'est proposée dans ce document.

L'invention a pour but un magasin de stockage compact autonomisé avec une navette autonome palliant les inconvénients des navettes selon l'état de la technique.

A cette fin, l'invention a pour objet un magasin de stockage selon la revendication 1.

Selon l'invention, le moyen d'alimentation électrique comprend une première partie pour charger le moyen de stockage d'énergie électrique et une seconde partie pour restituer l'énergie au moyen d'entraînement, ledit moyen de stockage d'énergie électrique étant composé d'au moins un condensateur, la première partie comprenant un limiteur de courant de coupage disposé entre la source d'énergie commune et le moyen de stockage d'énergie électrique et qui permet d'adapter l'intensité du courant selon la tension du moyen de stockage d'énergie électrique qui est fonction du niveau de charge dudit moyen de stockage d'énergie électrique la seconde partie comprenant un convertisseur CC/CC disposé entre le moyen de stockage d'énergie électrique et le moyen d'entraînement et qui permet de délivrer une tension constante aux bornes du moyen d'entraînement.

De manière préférée, le moyen de stockage d'énergie électrique comprend une batterie de supercondensateurs.

De manière préférée, chaque voie comprend une zone de recharge et, de manière avantageuse, la zone de recharge d'une voie est située à une extrémité de ladite voie et en ce que l'élévateur est disposé au voisinage de ladite extrémité de voie.

De manière préférée, le magasin de stockage comprend pour chaque allée deux armoires de rangement disposées de chaque côté de cette allée et comprend avantageusement une pluralité d'allées.

L'invention sera mieux comprise à la lecture des modes de réalisation qui suivent, donnés à titre illustratif mais non limitatif, en référence aux dessins annexés, sur lesquels :
- les figures 1 et 2 représentent de manière schématique respectivement une vue de dessus et une coupe selon l'axe II-II de la figure 1 d'un magasin de stockage selon l'invention,
- la figure 3 illustre une vue de dessus d'une navette autonome,
- la figure 4 représente une vue de côté de la navette de la figure 3, selon la direction A,
- la figure 5 illustre schématiquement un mode de réalisation du moyen d'alimentation électrique embarqué de la navette et,
- la figure 6 illustre schématiquement un mode de réalisation du limiteur de courant.

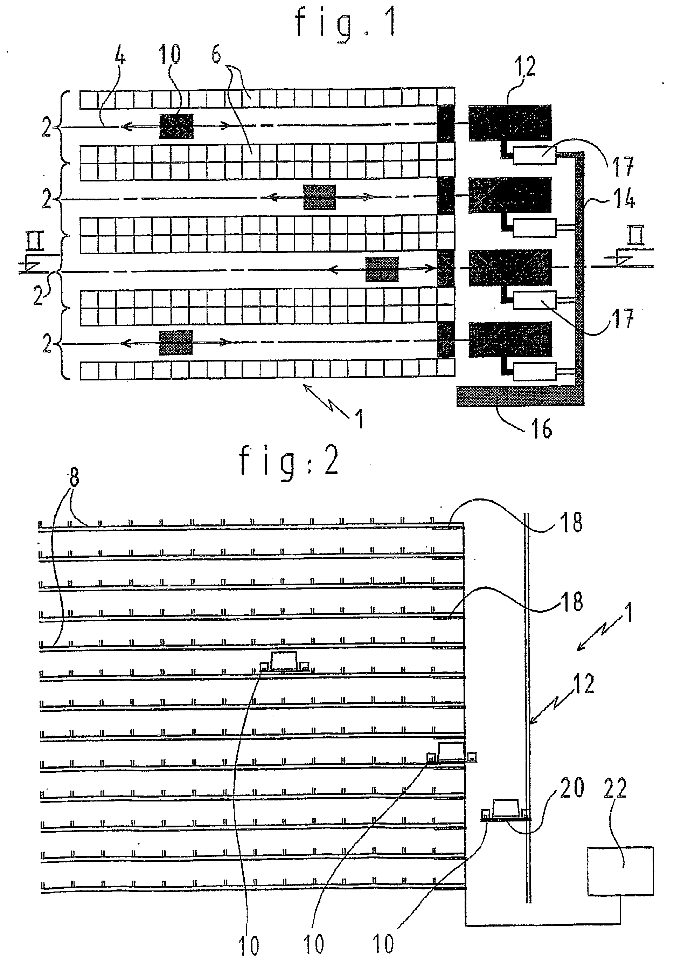

Le magasin de stockage 1 représenté sur les figures 1 et 2 comprend quatre ensembles de stockage 2, chacun comprenant une allée 4, deux armoires de rangement 6 à plusieurs niveaux et, à chaque niveau, une voie 8 comprenant deux rails parallèles pour le déplacement d'une navette 10. A chaque ensemble de stockage 2 est associé un élévateur 12, disposé à une extrémité de l'allée 4, pour transporter une navette 10 d'un niveau à un autre niveau.

Un convoyeur 14 est disposé de manière à pouvoir recevoir des objets d'une navette 10 placée dans un élévateur 12 et les transporter vers un poste de prélèvement 16. Une zone tampon 17 est interposée entre un élévateur 12 et le convoyeur 14, pour faciliter la circulation sur le convoyeur d'objets provenant de différents élévateurs.

Ce même convoyeur peut être également utilisé pour amener des objets à stocker vers une navette 10 située dans un élévateur 12. Alternativement, le stockage des objets pourrait être réalisé par un deuxième ensemble d'élévateurs disposés à l'autre extrémité des allées.

On notera que le nombre de navettes par allée peut être librement choisi entre 1 et n, où n est le nombre d'étages des armoires de rangement de l'allée, en fonction de l'application envisagée, et notamment des paramètres tels que la vitesse de rotation du stock, le temps d'accès maximum désiré à un objet, le coût de l'installation, etc.

On comprend que, de manière générale, un magasin de stockage 1 pourrait ne comprendre qu'une seule allée et qu'à chaque allée soit associée une seule ou deux armoires de stockage.

Selon l'invention, le magasin comprend des zones de recharge pour la recharge des navettes.

De préférence, comme représenté sur la figure 2, chaque voie 8 comporte au moins un tronçon de voie 18 électriquement conducteur définit une zone de recharge. Ce tronçon de voie comprend deux rails conducteurs, qui peuvent former les rails de la voie 8 elle-même ou être des rails supplémentaires parallèles à ceux de la voie 8.

Pour des raisons d'accès, et notamment pour la maintenance, il est avantageux de disposer les tronçons de voie 18 à une extrémité de l'allée. Et, de manière encore plus avantageuse, les tronçons de voie 18 sont disposés à l'extrémité de l'allée voisine des élévateurs 12.

L'élévateur peut également être équipé d'un tronçon de voie 20 définissant une zone de recharge.

Les zones de recharge correspondent ainsi à des zones d'attente, soit que la navette 10 est sur un tronçon 18 en attente d'une nouvelle mission ou de l'élévateur 12, soit qu'elle est sur le tronçon 20 en déplacement vertical par l'élévateur 12. Bien sûr, on pourra prévoir des zones de recharge supplémentaires, situées à d'autres emplacements des voies.

Selon l'invention, l'ensemble des tronçons de voie est relié à une alimentation électrique commune 22 par allée.

Dans le cas d'une pluralité d'allées, on peut envisager une alimentation électrique unique pour l'ensemble des allées ou pour un sous-ensemble d'allées.

En outre, dans une configuration d'entrepôt où la navette est amenée à circuler sur des voies en dehors du magasin, afin de relier plusieurs magasins entre eux ou différentes zones opérationnelles de l'entrepôt, on comprend que ces voies comporteront également des zones de recharge, disposées le long des voies à intervalle régulier en fonction de l'autonomie des navettes ainsi qu'à des positions stratégiques d'attente (zones de chargement/déchargement, transferts verticaux, etc).

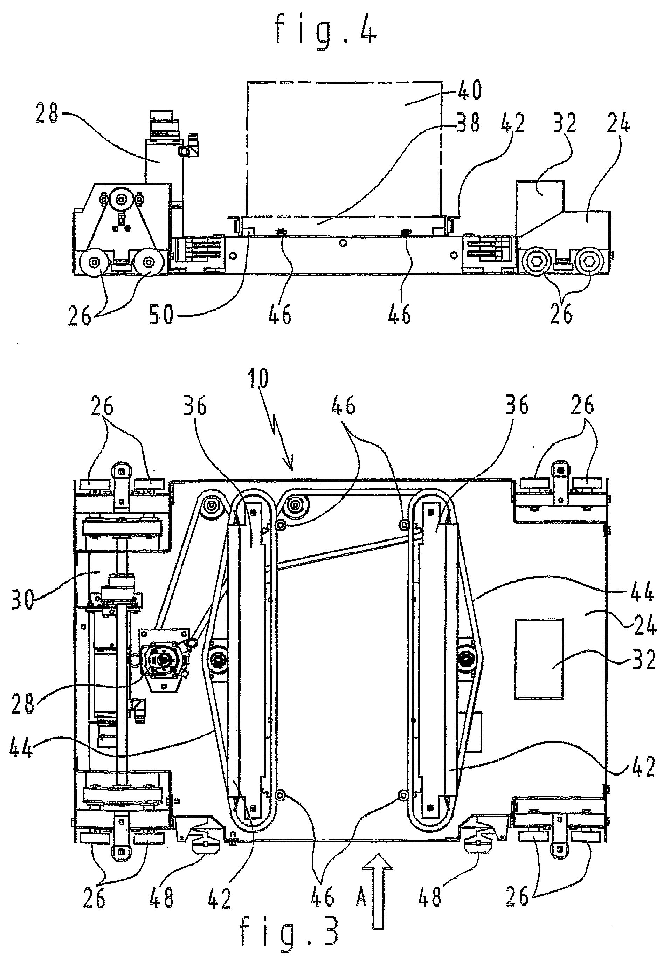

Un mode de réalisation d'une navette selon l'invention est représenté sur les figures 3 et 4.

La navette comprend un châssis 24 sur lequel sont montées des roues 26 pour le déplacement sur une voie 8 du magasin de stockage 1.

Il comprend également un moyen d'entraînement comprenant un moteur électrique 30 couplé aux roues 26. Ce moteur est alimenté par une batterie de supercondensateurs 32 embarqué sur la navette 10.

Dans sa partie centrale, la navette comprend une zone de réception 36 pour recevoir un plateau 38 pouvant accueillir un objet 40 tel que par exemple un carton ou un bac, des rails de guidage 42, et des moyens de transfert pour déplacer le plateau 38 d'un rangement du magasin de stockage 1 vers la navette ou inversement, selon une direction perpendiculaire à celle de la voie 8.

Dans le mode de réalisation représenté, les moyens de transfert comprennent deux boucles 44 qui peuvent être entraînées en rotation par le moteur 28. Chaque boucle 44 comporte deux doigts de préhension 46 qui coopèrent avec le plateau 38 pour l'entraîner en translation suivant une direction perpendiculaire à celle de la voie 8. Le moteur 28 est avantageusement alimenté par la même batterie de supercondensateurs 32 que celui du moteur 30.Pour plus de détails concernant le fonctionnement des moyens de transfert, on se référera à une demande de brevet déposée concomitamment au nom de la demanderesse.

La navette 10 comprend encore des collecteurs de courant 48 pour la recharge de la batterie de supercondensateurs 32 lorsque la navette est dans une zone de recharge.

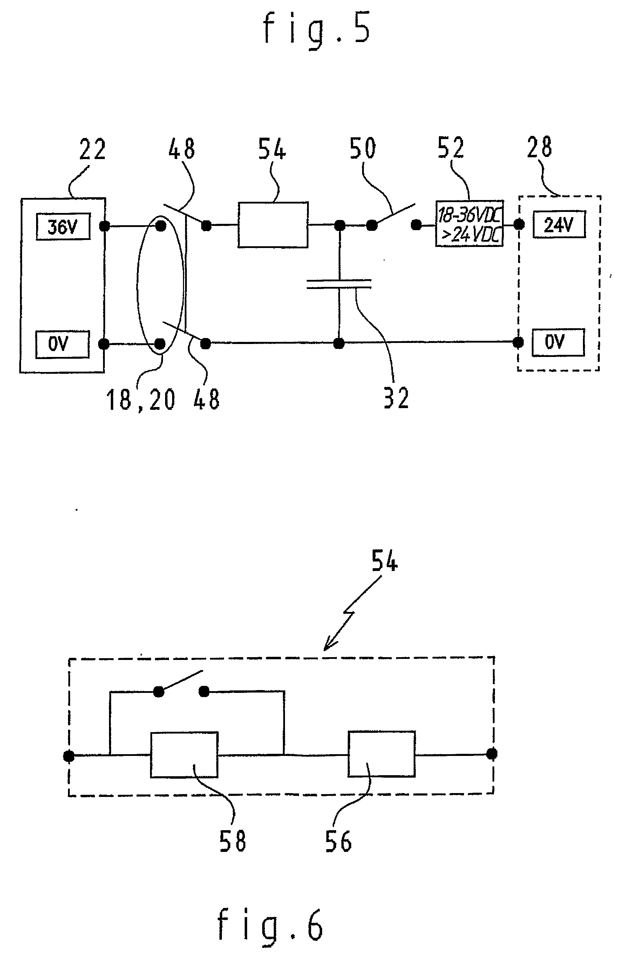

La figure 5 illustre de manière schématique le circuit électrique correspondant.

Le tronçon de voie 18 comprend deux éléments de rail reliés à deux bornes de tension de l'alimentation électrique 22. Lorsque la navette 10 se trouve dans une zone de recharge chaque collecteur de courant 48 est en contact avec l'un des éléments de rail du tronçon de voie 18.

Les bornes de la batterie de supercondensateurs 32 sont chacune reliée, d'une part, à un collecteur 48, éventuellement par l'intermédiaire d'un limiteur de courant, et, d'autre part, à un convertisseur de tension qui fournit une tension stabilisée à l'équipement électrique de la navette (moteurs 28, 30 et autres automatismes). En effet, la tension de la batterie de supercondensateurs 32 diminue de façon importante au cours de la décharge entre une valeur maximale et une valeur minimale (par exemple de 36 à 18 V), d'où la présence du convertisseur de tension. Par exemple, comme représenté sur la figure 5, l'alimentation électrique 22 est à une tension de 36V et le moteur fonctionne avec une tension de 24V. On interpose donc, entre la batterie de supercondensateurs 32 et le moteur 28 un convertisseur CC/CC délivrant une tension constante de 24V au moteur 28.

La batterie de supercondensateurs 32 se recharge dans les zones de recharge et alimente le moteur 28 lorsqu'un interrupteur de commande est commandé en position fermé.

Selon l'invention, l'alimentation électrique est unique pour au moins les zones de recharge d'un ensemble de stockage (une allée et un élévateur) et peut comporter plusieurs navettes. Il se peut donc que plusieurs navettes soient simultanément en attente dans des zones de recharge différentes. La tension de la batterie de supercondensateurs varie dans de fortes proportions pendant la charge (par exemple de 18 à 36 V).

Pour que la recharge des navettes se produise correctement quel que soit le nombre de navettes en attente, et pour protéger la batterie de supercondensateurs 32 un dispositif de limitation de courant 54 est interposé entre l'alimentation électrique commune 22 et la batterie de supercondensateurs 32.

Ce limiteur de courant 54 peut être soit incorporé à l'alimentation commune 22 soit être un dispositif électronique à découpage. Il peut aussi être réalisé très simplement, comme représenté sur la figure 6, par un ensemble de deux résistances 56 et 58, la résistance 56 limitant le courant, par exemple à 20 A, pendant le cycle de fonctionnement normal (tension de la batterie de supercondensateurs 32 variant par exemple de 18 à 36 V). La résistance 58 est active au début de la charge, lorsque la batterie de supercondensateurs 32 est complètement déchargée. Elle est ensuite court-circuitée lorsque la tension de la batterie de supercondensateurs 32 atteint la valeur minimale de fonctionnement en cycle (par exemple, 18 V). Ce limiteur permet donc d'adapter l'intensité du courant selon la tension du moyen de stockage d'énergie électrique 32 qui est fonction du niveau de charge dudit moyen de stockage d'énergie électrique 32.

En outre, la navette 10 comporte un dispositif de contrôle du niveau de charge du moyen de stockage d'énergie électrique et en particulier de la batterie 32 de supercondensateurs, qui va conditionner l'arrêt et la durée de cet arrêt de la navette dans une zone de recharge, que ce soit dans le magasin 1 ou en-dehors.

Enfin, il va de soi que la présente invention, n'est pas limitée aux exemples de réalisation décrits, mais qu'elle peut être modifiée ou adaptée en fonction des besoins ou des exigences particulières, sans pour autant sortir du cadre de l'invention.

## Revendications

1. - Magasin de stockage (1) compact automatisé comprenant une armoire de rangement (6) à plusieurs niveaux de rangement superposés, une allée (4) comprenant pour chaque niveau une voie (8), au moins une navette autonome (10) apte à se déplacer sur une voie (8) pour stocker ou prélever des objets (40) dans l'armoire de rangement (6), et un élévateur (12) pour déplacer une navette autonome (10) d'un niveau de rangement à un autre niveau de rangement, ledit magasin comprenant une pluralité de zones de recharge (18, 20) pour recevoir chacune une navette (10), les zones de recharge (18) de l'allée étant reliées à une source d'énergie commune (22), chaque navette (10) comprenant un châssis (24) sur lequel sont montés :
- des roues (26) pour le déplacement de la navette (10) sur des rails d'une voie (8) du magasin de stockage (1),
- un moyen d'entraînement (30) des roues (26),
- un moyen d'alimentation électrique de la navette comprenant un moyen de stockage d'énergie électrique (32) uniquement de type électrostatique étant composé d'au moins un condensateur , et
- un moyen de liaison (48) avec des zones de recharge (18, 20) reliées à une alimentation électrique commune (22) à tension fixe pour recharger le moyen d'alimentation électrique,
**caractérisé en ce que** le moyen d'alimentation électrique comprend une première partie pour charger le moyen de stockage d'énergie électrique (32) et une seconde partie pour restituer l'énergie au moyen d'entraînement (30), la première partie comprenant un limiteur de courant (54) disposé entre la source d'énergie commune (22) et le moyen de stockage d'énergie électrique (32) et qui permet d'adapter l'intensité du courant selon la tension du moyen de stockage d'énergie électrique (32) qui est fonction du niveau de charge dudit moyen de stockage d'énergie électrique (32), la seconde partie comprenant un convertisseur CC/CC disposé entre le moyen de stockage d'énergie électrique (32) et le moyen d'entraînement (30) et qui permet de délivrer une tension constante aux bornes du moyen d'entraînement (30), et **en ce que** l'élévateur (12) comprend une zone de recharge (20).

2. - Magasin de stockage (1) selon la revendication 1, **caractérisé en ce que** chaque voie (8) comprend au moins une zone de recharge (18).

3. - Magasin de stockage (1) selon la revendication 2, **caractérisé en ce que** la zone de recharge (18) d'une voie (8) est située à une extrémité de ladite voie (8) et **en ce que** l'élévateur (12) est disposé au voisinage de ladite extrémité de voie (8).

4. - Magasin de stockage (1) selon l'une quelconque des revendications 1 à 3, **caractérisé en ce que** le moyen de stockage d'énergie électrique (32) comprend une batterie de supercondensateurs.

5. - Magasin de stockage (1) selon l'une quelconque des revendications 1 à 4, **caractérisé en ce que** le limiteur de courant (54) est un dispositif résistif comprenant au moins une résistance (56, 58).

6. - Magasin de stockage (1) selon la revendication 5, **caractérisé en ce que** le limiteur de courant (54) comprend deux résistances (56, 58) montées en série dont l'une peut être court-circuitée.

7. - Magasin de stockage (1) selon l'une quelconque des revendications 1 à 4, **caractérisé en ce que** le limiteur de courant (54) est un circuit électronique à découpage.

8. - Magasin de stockage (1) selon l'une quelconque des revendications 1 à 7, **caractérisé en ce que** chaque navette comprend un dispositif de contrôle du niveau de charge du moyen de stockage d'énergie électrique (32).

## Patentansprüche

1. Automatisiertes Kompaktlager (1), umfassend einen Lagerschrank (6) mit mehreren übereinanderliegenden Lagerebenen, einen Gang (4), der für jede Ebene ein Gleis (8) aufweist, mindestens ein autonomes Fahrband (10), das geeignet ist, sich auf einem Gleis (8) zu bewegen, um Gegenstände (40) in dem Lagerschrank (6) zu lagern oder daraus zu entnehmen, und einen Aufzug (12), um ein autonomes Fahrband (10) von einer Lagerebene zu einer anderen Lagerebene zu bewegen, wobei das Lager mehrere Aufladebereiche (18, 20) aufweist, um jeweils ein Fahrband (10) aufzunehmen, wobei die Aufladebereiche (18) des Gangs mit einer gemeinsamen Energiequelle (22) verbunden sind, wobei jedes Fahrband (10) ein Fahrgestell (24) aufweist, auf dem Folgendes montiert ist:
- Räder (26) zum Bewegen des Fahrbands (10) auf den Schienen eines Gleises (8) des Lagers (1),
- ein Antriebsmittel (30) der Räder (26),
- ein Stromversorgungsmittel des Fahrbands, umfassend ein Mittel zur Speicherung der elektrischen Energie (32) nur vom elektrostatischer Typ, das aus mindestens einem Kondensator zusammengesetzt ist, und
- ein Mittel zum Verbinden (48) mit den Aufladebereichen (18, 20), die mit einer gemeinsamen Stromversorgung (22) mit fester Spannung verbunden sind, um das Stromversorgungsmittel aufzuladen,
**dadurch gekennzeichnet, dass** das Stromversorgungsmittel einen ersten Teil zum Laden des Mittels zur Speicherung der elektrischen Energie (32) und einen zweiten Teil zum Abgeben der Energie an das Antriebsmittel (30) aufweist, wobei der erste Teil einen Strombegrenzer (54) aufweist, der zwischen der gemeinsamen Stromquelle (22) und dem gemeinsamen Mittel zur Speicherung der elektrischen Energie (32) angeordnet ist und ermöglicht, die Stromstärke nach der Spannung des Mittels zur Speicherung der elektrischen Energie (32) anzupassen, die von dem Ladezustand des Mittels zur Speicherung der elektrischen Energie (32) abhängt, wobei der zweite Teil einen DC-DC-Wandler aufweist, der zwischen dem Mittel zur Speicherung der elektrischen Energie (32) und dem Antriebsmittel (30) angeordnet ist und der ermöglicht, eine konstante Spannung an die Klemmen des Antriebsmittels (30) anzulegen, und dass der Aufzug (12) einen Aufladebereich (20) aufweist.

2. Lager (1) nach Anspruch 1, **dadurch gekennzeichnet, dass** jedes Gleis (8) mindestens einen Aufladebereich (18) aufweist.

3. Lager (1) nach Anspruch 2, **dadurch gekennzeichnet, dass** der Aufladebereich (18) eines Gleises (8) an einem Ende des Gleises (8) angeordnet ist und dass der Aufzug (12) in der Nähe des Endes des Gleises (8) angeordnet ist.

4. Lager (1) nach einem der Ansprüche 1 bis 3, **dadurch gekennzeichnet, dass** das Mittel zur Speicherung der elektrischen Energie (32) eine Batterie von Superkondensatoren aufweist.

5. Lager (1) nach einem der Ansprüche 1 bis 4, **dadurch gekennzeichnet, dass** der Strombegrenzer (54) eine Widerstandsvorrichtung ist, die mindestens einen Widerstand (56, 58) aufweist.

6. Lager (1) nach Anspruch 5, **dadurch gekennzeichnet, dass** der Strombegrenzer (54) zwei Widerstände (56, 58) aufweist, die in Reihe geschaltet sind, wovon einer kurzgeschlossen werden kann.

7. Lager (1) nach einem der Ansprüche 1 bis 4, **dadurch gekennzeichnet, dass** der Strombegrenzer (54) eine elektronische Trennschaltung ist.

8. Lager (1) nach einem der Ansprüche 1 bis 7, **dadurch gekennzeichnet, dass** jedes Fahrband eine Kontrollvorrichtung des Ladezustands des Mittels zur Speicherung der elektrischen Energie (32) aufweist.

## Claims

1. - Compact, automated storage warehouse (1), including a storage cabinet (6) with several levels of superimposed storage, a lane (4), including, for each level, a path (8), at least one autonomous shuttle (10), able to move over a path (8), to store or remove items (40) in the storage cabinet (6), and an elevator (12) to move an autonomous shuttle (10) from one storage level to another storage level, said warehouse including multiple recharging areas (18, 20) for each one to receive a shuttle (10), the recharging areas (18) in the lane being connected to a shared energy source (22), each shuttle (10) including a chassis (24), whereon are mounted:
- wheels (26) for moving the shuttle (10) on the rails of a path (8) of the storage warehouse (1),
- a drive means (30) for driving the wheels (26),
- an electrical power supply means means for the shuttle, including a means for storing electric energy (32), only of the electrostatic type, being comprised of at least one capacitor, and
- a means for connection (48) with the recharging areas (18, 20), connected to a shared electrical power supply (22), at a fixed voltage, to recharge the electrical power supply means, **characterised in that** the electrical power supply means (32) comprises a first section to charge the means for storing electrical energy (32) and a second section to deliver the energy to the driving means (30), the first section including a current limiter (54), placed between the shared energy source (22) and the means for storing electric energy (32), and which enables the intensity of the current to be adapted, according to the voltage of the means for storing electric energy (32), which is function of the charge level of said means for storing electric energy (32), the second section including a DC/DC converter, placed between the means for storing electric energy (32) and the driving means (30), and which enables a constant voltage to be delivered to the terminals of the driving means (30), and **in that** the elevator (12) includes a recharging area (20).

2. - Storage warehouse (1) according to Claim 1, **characterised in that** each path (8) includes at least one recharging area (18).

3. - Storage warehouse (1) according to Claim 2, **characterised in that** the recharging area (18) of a path (8) is located at one end of said path (8), and **in that** the elevator (12) is located close to said end of the path (8).

4. - Storage warehouse (1) according to any one of Claims 1 to 3, **characterised in that** the means for storing electric energy (32) include a supercapacitor battery.

5. - Storage warehouse (1) according to any one of Claims 1 to 4, **characterised in that** the current limiter (54) is a resistive device, including at least one resistor (56, 58).

6. - Storage warehouse (1) according to Claim 5, **characterised in that** the current limiter (54) includes two resistors (56, 58), mounted in series, of which one can be short-circuited.

7. - Storage warehouse (1) according to any one of Claims 1 to 4, **characterised in that** the current limiter (54) is an electronic cut-off circuit.

8. - Storage warehouse (1), according to any one of Claims 1 to 7, **characterised in that** each shuttle comprises a device for controlling the level of charge of the means for storing electric energy (32).
